Europäisches Patentamt

European Patent Office

Office européen des brevets

(11) Veröffentlichungsnummer: **0 249 600**
**B1**

# (12) EUROPÄISCHE PATENTSCHRIFT

(45) Veröffentlichungstag der Patentschrift:
04.01.89

(21) Anmeldenummer: 86906747.0

(22) Anmeldetag: 25.11.86

(86) Internationale Anmeldenummer:
PCT/CH 86/00162

(87) Internationale Veröffentlichungsnummer:
WO 87/03351 (04.06.87 Gazette 87/12)

(51) Int. Cl.⁴: **F 16 H 21/46, B 01 F 11/00**

(54) **VORRICHTUNG ZUM ANTRIEB EINES KÖRPERS, DER EINE TAUMELNDE UND ROTIERENDE BEWEGUNG AUSFÜHRT.**

(30) Priorität: 29.11.85 DE 3542285

(43) Veröffentlichungstag der Anmeldung:
23.12.87 Patentblatt 87/52

(45) Bekanntmachung des Hinweises auf die Patenterteilung:
04.01.89 Patentblatt 89/1

(84) Benannte Vertragsstaaten:
CH FR GB IT LI

(56) Entgegenhaltungen:
DE-A-1 145 455
DE-A-1 207 750
DE-A-3 034 331
DE-A-3 542 285

(73) Patentinhaber: Oloid AG, Henric Petri- Strasse 35,
CH- 4001 Basel (CH)

(72) Erfinder: SALADIN, Joseph, Bubenloostrasse 24,
CH- 9500 Wil (CH)

(74) Vertreter: Scheidegger, Zwicky, Werner & Co.,
Stampfenbachstrasse 48 Postfach, CH- 8023
Zürich (CH)

EP 0 249 600 B1

## Beschreibung

Die Erfindung betrifft eine Vorrichtung zum Antrieb eines Körpers, der zur Ausführung einer taumelnden und rotierenden Bewegung, die auf dem Prinzip der umstülpbaren Gelenkkette beruht, an zwei gabelförmigen Lenkern mittels Drehzapfen zur Bewegung um zwei zueinander windschiefe Achsen aufgehängt ist, wobei die Lenker mittels je eines Schwenklagers mit je einer Welle verbunden sind entsprechend den Merkmalen des Oberbegriffs von Anspruch 1, wie sie aus der DE-A-3 034 331 bekannt ist.

Damit der Körper die taumelnde und rotierende Bewegung ausführt, wird mindestens eine der beiden parallelen Wellen angetrieben, wobei sich dann die zweite Welle aufgrund der Verbindung der beiden Wellen durch die aus den Lenkern und dem Körper bestehenden Glieder der Gelenkkette mitdreht.

Die Kinematik der umstülpbaren Gelenkkette bedingt jedoch, dass die beiden Wellen gegensinnig und wechselweise mit periodisch abwechselnd zunehmender und abnehmender Winkelgeschwindigkeit rotieren müssen, wenn eine regelmässige Bewegung des an den Lenkern aufgehängten und rotierenden sowie gleichzeitig taumelnden Körpers erzielt werden soll.

Der Körper selbst dient entweder als Hohlkörper zur Aufnahme von Behandlungsgut, welches physikalischen oder chemischen Prozessen unterworfen wird, wobei aufgrund der gleichzeitigen Taumel - und Rotationsbewegung besonders günstige Wirkungen hinsichtlich des Ablaufs solcher Prozesse erzielt werden. Insbesondere handelt es sich um die Herstellung von Mischungen mit feinster Verteilung der zu mischenden Komponenten, z. B. um das Vermischen von in der Kunststoffherstellung verwendeten sehr empfindlichen Feinpulvern mit Schmiermitteln für die Pastenextrusion oder mit Farbpigmenten. Ferner dient der Körper zum Homogenisieren, Emulgieren, zur Herstellung von Pulvermischungen wie z. B. Sintermetallpulvern usw.

Besonders günstige Wirkungen werden mit einem als Oloid ausgebildeten Körper erzielt, welcher ein Regelkörper mit zwei konvexen Kanten ist, die gleiche konstante Krümmungen aufweisen und in zwei im rechen Winkel zueinander stehenden Ebenen liegen, wobei eine Hüllfläche überall gerade Mantellinien zwischen diesen Kanten besitzt. Bei dem bekannten Oloidkörper ist die Bewegung derart, dass es bezüglich des zurückgelegten Weges längs der Bahnlinie eines Punktes des Oloids keinen Umkehrpunkt gibt. Die dreidimensionale Bahnlinie aller Punkte des bewegten Körpers ist die Erklärung für die guten Mischresultate bei Verwendung eines solchen Körpers.

Der gleiche Körper lässt aber auch ebensogute Wirkungen in einem den Körper umgebenden Behandlungsgut erzielen und dient bei dieser Anwendung insbesondere als Rührorgan Aufgrund der vorstehend beschriebenen besonderen Art seiner Bewegung ist der Körper jedem anderen nur einfach rotierenden Rührorgan überlegen, bei dem man eine Entmischung durch Zentrifugalwirkung und eine Scherbeanspruchung des Rührgutes durch Wirbelbildung und wegen der Erzeugung turbulenter Strömungen entsprechend hohen Energiebedarf in Kaufnehmen muss.

Bei dem vorstehend beschriebenen taumelnden und rotierenden Körper als Rührorgang in einer Flüssigkeit tritt keine Scherwirkung auf, und die Bewegung erfolgt ohne Strömungsabriss an den Körperenden und ohne die damit verbundene Verwirbelung. In der sich dabei ergebenden Flüssigkeitsbewegung wird eingetragene Luft oder Sauerstoff sofort dispergiert und homogen verteilt, weshalb sich die Vorrichtung in ausgezeicheter Weise für die Gewässersanierung durch Eintragung von Sauerstoff eignet, was nur eine der zahlreichen Anwendungsmöglichkeiten darstellt.

Der Antrieb des Körpers über mindestens eine Welle oder für einen grossen Körper und entsprechende Leistung vorzugsweise beide parallelen Wellen bereitet wegen der an beiden Wellen wechselweise verlangten Beschleunigungen bzw. Verzögerungen einige technische Schwierigkeiten.

Für den Antrieb nur einer Welle ist bei einem aus der CH-PS-496 912 bekannten sogenannten Pendelantrieb auf der Antriebswelle ein schwenkbar mit derselben verbundenes Pendel angeordnet, auf welchem sich ein mit der Welle zwangsläufig gekoppeltes Steuerorgan Vorzugsweise in Form einer am Pendel drehbar gelagerten Kurbel befindet, das in Wirkungsverbindung mit mindestens einem Festpunkt der Vorrichtung eine periodische, in Abhängigkeit von der Drehzahl der Welle erfolgende Schwenkbewegung des Pendel 5 hervorruft Die Kurbel wird über einen Riemen von der Welle mit der halben Drehzahl derselben angetrieben. Der mit der Kurbel in Wirkungsverbindung stehende Festpunkt der Vorrichtung ist ein Führungsschlitz, in welchem der Kurbelzapfen hin- und hergleitet, so dass bei jeder Umdrehung der Antriebswelle das Pendel zwei volle Hin- und Hergänge macht, wobei sich bei Bewegung des Pendels im Sinne der Drehrichtung der Antriebswelle durch Überlagerung der beiden Bewegungen eine Beschleunigung ergibt und bei Bewegung des Pendels in entgegengesetzter Richtung eine Verzögerung resultiert. Mit diesem Antrieb lässt sich nur eine der beiden Wellen antreiben, so dass für die Grösse des in die taumelnde und rotierende Bewegung zu versetzenden Behälters die Grenze bei ca. 500 l Inhalt liegt.

Um beide Wellen mit den ungleichförmigen Winkelgeschwindigkeiten antreiben zu können, sind verschiedene andere Lösungen vorgeschlagen worden. So ist aus der DE-PS-1 145 455 die Verwendung von Kardangelenken zwischen den Antriebswellen und einer motorisch angetriebenen Welle bekannt, die mit der verlängerten Achse der von ihr angetriebenen Welle einen Winkel von 45° bildet, weil bekanntlich bei einem Kardan-Gelenk periodisch sich ändernde Winkelgeschwindigkeiten auftreten. Dieser Antrieb braucht viel Platz und wegen der starken Abwinkelung von 45° tritt in den Kardangelenken und Wellenlagerungen zu viel Verschleiss auf.

Eine aus der DE-PS-1 207 750 bekannte Vorrichtung zur Lösung dieses Antriebsproblems weist ein Reibkugelgetriebe als Ausgleichsgetriebe an einer der Wellen auf, während die zweite Welle über eine Kette von einem Ring dieses Reibkugelgetriebes angetrieben wird. Wegen der ungleichförmigen Winkelgeschwindigkeit der bei den Wellen tritt aber in dem Ausgleichsgetriebe ebenfalls viel Reibung auf.

Ferner weist der gattungsgemäße Antrieb gemäß der DE-PS-3 034 331 elastische Wellenkupplungen an den Antriebswellen auf. Zwischen den Kupplungsscheiben auf einem Kreis abwechselnd aufeinanderfolgend angeordnete Kugeln und Druckfedern erlauben bei diesem nicht zwangsläufigen Antrieb eine periodisch sich wiederholenden Relativverdrehung der Kupplungsteile zueinander. Das elastische Nachgeben im Antriebssystem, das durch die auftretenden Massenkräfte beeinflusst wird, verläuft nicht mit dem geforderten Bewegungsrhythmus konform. Der herstellungstechnische Aufwand ist für verhältnissmässig gross.

Es ist bereits erwähnt worden, dass der Körper ausser als Mischbehälter auch als Rührorgan in einem den Körper umgebenden Medium mit sehr gutem Erfolg verwendet wird. Dabei kann es sich beispielsweise um Wasser handeln, in das mit Hilfe des taumelnden und rotierenden Körpers Sauerstoff eingetragen werden soll, und in diesem Fall braucht man nur einen im Verhältnis zu dem in einem Behälter enthaltenen Wasservolumen kleinen Körper als Rührorgan.

Es wurde bereits eingangs erwähnt, dass es genügt, nur eine der beiden zueinander parallelen Wellen anzutreiben, wobei die zweite Welle dann aufgrund ihrer Verbindung über die Glieder der Gelenkkette mit der angetriebenen Welle von dieser gegensinnig mitgedreht wird. In sämtlichen Gelenken der Gelenkkette und in der Lagerung der nicht angetriebenen Welle entsteht Reibung, die der Antrieb der angetriebenen Welle überwinden muss. Wenn die Welle eine Umdrehung macht, führt auch der an den beiden Wellen über die Lenker aufgehängte Körper die taumelnde rotierende Bewegung einmal bis zum Erreichen der gleichen Ausgangsstellung aus. Bezüglich der taumelnden und rotierenden Bewegung ist es nun gleichgültig, ob die eine Welle in dem die beiden Wellenlagerungen aufnehmenden Maschinengestell gedreht wird, oder ob das Maschinengestell um die Welle als Zentrumsachse gedreht wird, wobei dann die im Abstand von der im Zentrum angeordneten Welle im Maschinengestell nur drehbar gelagerte und umlaufende Welle aufgrund der Verbindung zwischen den beiden Wellen durch die Glieder der Gelenkkette gedreht wird, so dass der aufgehängte Körper die taumelnde und rotierende Bewegung ausführt.

Der vorliegenden Erfindung lag die Aufgabe zugrunde, für einen taumelnden und rotierenden Körper, der insbesondere zur Verwendung als Rührorgan in einem ihn umgebenden Medium bestimmt ist, einen einfacheren Antrieb zu entwickeln, bei dem auf zusätzliche konstruktive Massnahmen zur Berücksichtigung der ungleichförmigen Winkelgeschwindigkeiten der den Körper tragenden Wellen verzichtet werden kann. Dies wird erfindungsgemäss dadurch erreicht, dass die eine Welle im konstanten Abstand von der zweiten Welle um diese umläuft. Vorzugsweise ist die umlaufende Welle drehbar in einem zur zweiten Welle konzentrischen und rotierend antreibbaren Ring gelagert. Dieser Ring kann zweckmässig durch einen mit diesem verbundenen Zahnkranz und ein mit diesem in Eingriff stehendes Zahnrad angetrieben sein, wobei dieses Zahnrad auf der Welle eines Antriebsmotors angeordnet ist. Der Ring ist zweckmässig auf der zweiten, durch das Zentrum des Rings sich erstreckenden, feststehenden Welle drehbar gelagert. Die feststehende Welle kann zweckmässig in einem von einer runden Scheibe gebildeten Maschinengehäuse gehalten sein, an welchem der Antriebsmotor angeflanscht ist und unterhalb welchem sich der mit einem Zahnkranz versehene Ring dreht, mit dem eine der beiden den Körper tragenden Wellen umläuft.

Der Vorteil der erfindungsgemässen Vorrichtung besteht nicht nur darin, dass man die angestrebte Wirkung bei Verwendung des taumelnden und rotierenden Körpers als Mittel zur Erzielung einer Aussenwirkung in einem umgebenden Medium wie beispielsweise zum Sauerstoffeintrag in ein Gewässer mit einem einfachen und billig herstellbaren Gerät erreicht, sondern dass bei der als Beispiel genannten Anwendung auch bessere Ergebnisse erreicht werden, als mit einem bekannten Gerät gleicher Grösse, bei dem der Körper von parallel zueinander in einem Maschinengestell gelagerten Wellen zur Ausführung der taumelnden und rotierenden Bewegung angetrieben wird. Die Menge des eingetragenen Sauerstoffs ist grösser und die dafür erforderliche Zeit kleiner, welche günstige Wirkung auch darauf zurückzuführen sein dürfte, dass zusätzlich zu der taumelnden und rotierenden Bewegung des Körpers noch seine Bewegung auf einer kreisförmigen Bahn um die eine Welle als Zentrum hinzu kommt, wodurch die Wirkung sich nach allen Seiten hin ausbreitet.

Die taumelnde und rotierende Bewegung des Körpers selbst ist zwar nicht identisch mit der Bewegung eines durch eine oder zwei stationäre Wellen angetriebenen Körpers, was jedoch angesichts der vorstehend geschilderten Vorteile in Kauf genommen werden kann, zumal man bei dem in der erfindungsgemässen Weise umlaufenden Körper mit einer geringeren Antriebsleistung auskommt, weil das eingeleitete Drehmoment an einem längeren Hebelarm wirksam ist und der die umlaufende Welle tragende Ring einschliesslich des daran hängenden Gewichtsanteils als Schwungmasse wirkt.

Weitere Einzelheiten und Vorteile ergeben sich aus der nachfolgenden Beschreibung und den Zeichnungen, in denen eine Ausführungsform des Erfindungsgegenstandes beispielsweise dargestellt ist. Es zeigen:

Fig. 1 einen Vertikalschnitt durch die Vorrichtung;

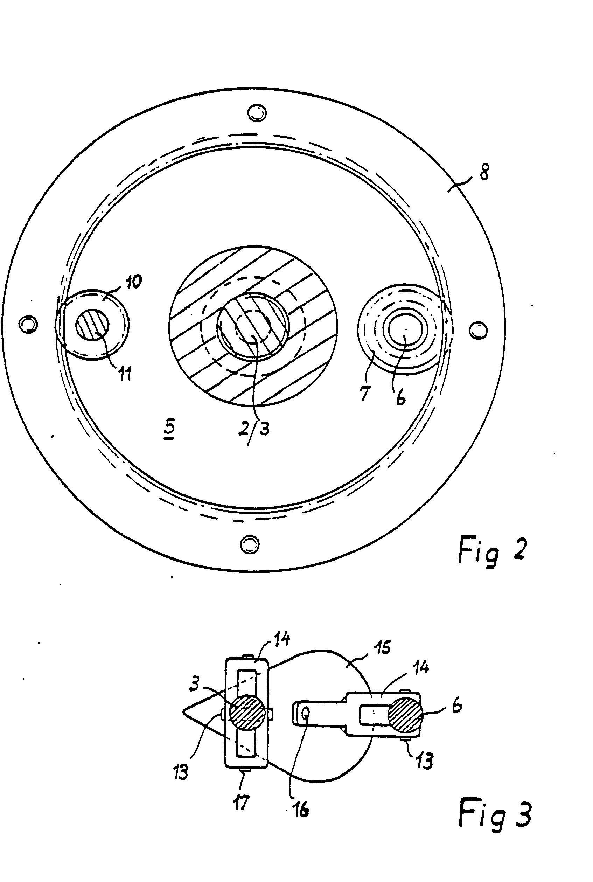

Fig. 2 einen Querschnitt durch die Vorrichtung gemäss der Linie II-II in Fig. 1;

Fig. 3 einen Querschnitt durch die Vorrichtung gemäss der Linie III-III in Fig. 1;

Fig. 4 einen Vertikalschnitt durch einen mit der Vorrichtung zusammenarbeitenden Mischbehälter.

Die Vorrichtung weist eine Trägerscheibe 1 auf, in deren Zentrum ein Achskörper 2 befestigt ist. In diesem Achskörper 2 ist eine feststehende Welle 3 befestigt. Der Achskörper 2 und die Welle 3 können auch einstückig ausgebildet sein. Auf dem Achskörper 2 ist mittels Wälzlagern 4 ein Ring 5 drehbar gelagert. In dem Ring 5 ist im Abstand von der feststehenden Welle 3 eine umlaufende Welle 6 mittels Wälzlagern 7 drehbar gelagert. Auf dem Ring 5 ist oben ein Zahnkranz 8 mit einer Innenverzahnung 9 befestigt. Mit dieser Innenverzahnung 9 steht ein Zahnrad 10 in Eingriff, welches auf einer Welle 11 eines Antriebsmotors 12 befestigt ist, welcher an die Trägerscheibe 1 angeflanscht ist. Das durch den Motor 12 angetriebene Zahnrad 10 dreht den Zahnkranz 8 und den mit diesem verbundenen Ring 5 um den in der Trägerscheibe 1 fest angeordneten Achskörper 2.

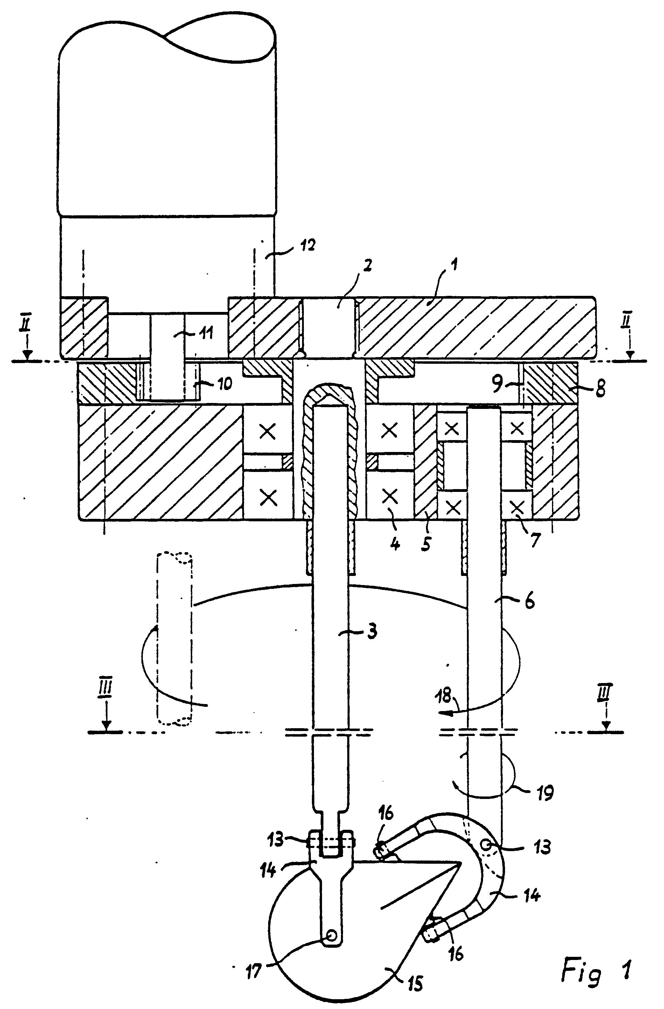

An dem unteren Ende jeder der bei den Wellen 3 und 6 ist jeweils mittels eines Schwenklagers 13 ein gabelförmiger Lenker 14 angelenkt. Der zur Ausführung der taumelnden und rotierenden Bewegung an den Lenkern 14 aufgehängte Körper 15 ist als Oloid ausgebildet und weist für die Verbindung mit dem in Fig. 1 rechten Lenker 14 zwei Drehzapfen 16 auf und für die Verbindung mit dem linken Lenker 14 zwei Drehzapfen 17 auf. Die Verbindungslinie der beiden in Fig. 1 in der Zeichenebene hintereinanderliegenden Drehzapfen 17 bildet die eine Achse und die zu dieser windschiefe Verbindungslinie der beiden Drehzapfen 16 bildet die zweite Achse, um welche beiden zueinander windschiefen Achsen der Körper 15 bewegbar ist und dabei die taumelnde und rotierende Bewegung ausführt, wenn die Welle 6 um die feststehende Welle 3 umläuft, wie durch den Pfeil 18 angedeutet ist, wobei sich die Welle 6 um ihre Achse dreht, wie durch den Pfeil 19 angedeutet ist. Während einer Umlaufbewegung der Welle 6 macht der Körper 15 eine volle Drehung und taumelt gleichzeitig bei dieser Drehbewegung. Der gabelförmige Lenker 14 am Ende der feststehenden Welle 3 schwenkt dabei nur hin und her. Voraussetzung für die vorstehend beschriebene Bewegung sind gleichgrosse Abstände zwischen dem Schwenklager 13 und der durch die beiden Drehzapfen 16 verlaufenden Achse beim in Fig. 1 rechten Lenker und zwischen dem Schwenklager 13 und dem durch die beiden Drehzapfen 17 verlaufenden Achse beim linken Lenker 14, und ebenso gross muss auch der Abstand zwischen den beiden zueinander windschiefen Achsen sein. Dieser festgelegte Abstand mal Wurzel 3 ergibt den erforderlichen Abstand zwischen den beiden Wellen 3 und 6.

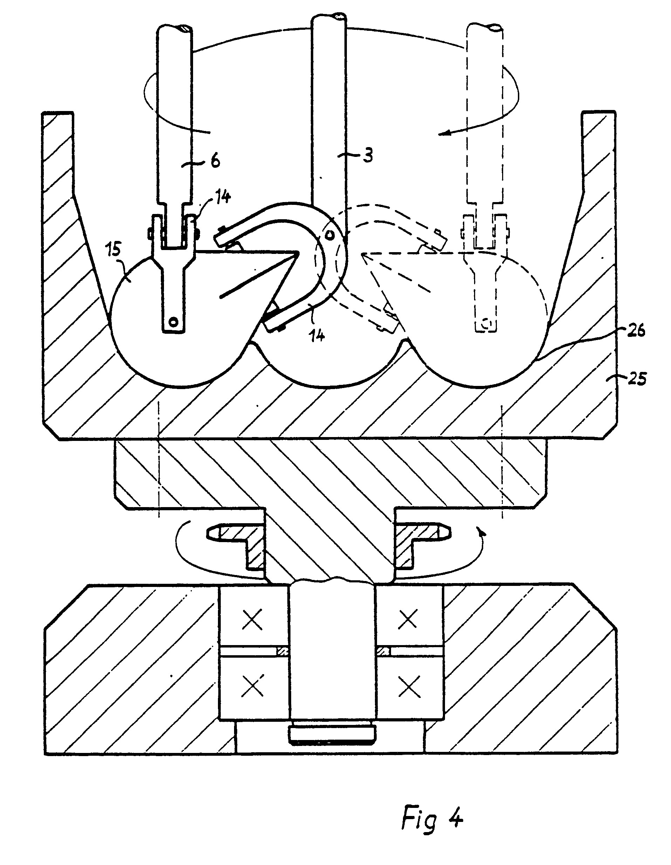

Eine weitere Anwendung des taumelnden und rotierenden Körpers, der eine Umlaufbewegung macht, ist in Fig. 4 dargestellt. Ein zu der Umlaufbewegung des Körpers 15 gegensinnig rotierend angetriebener Behälter 25 weist eine kreisringförmige Mulde 26 auf. Der gewölbte Boden der Mulde weist einen Krümmungsradius auf, der mit jenem der kreisbogenförmigen Kante des Körpers 15 in dessen in Fig. 4 dargestellter Drehstellung übereinstimmt. Diese Stellung nimmt der Körper 15 zweimal während eines Umlaufs ein. Durch beliebige Wahl der Drehzahl des sich gegensinnig drehenden Behälter 25 können in der Mulde 26 vorhandene, verschiedene Arten Pulver oder Schüttgut vermischt werden oder in anderer Weise beispielsweise durch Zugabe einer wässrigen Komponente behandelt werden.

## Patentansprüche

1. Vorrichtung zum Antrieb eines Körpers, der zur Ausführung einer taumelnden und rotierenden Bewegung, die auf dem Prinzip der umstülpbaren Gelenkkette beruht, an zwei gabelförmigen Lenkern (14) mittels Drehzapfen (16, 17) zur Bewegung um zwei zueiander windschiefe Achsen aufgehängt ist, wobei die Lenker mittels je eines Schwenklagers (13) mit je einer von zwei zueinander parallelen Wellen (3, 6) verbunden sind, dadurch gekennzeichnet, dass die eine Welle (6) im konstanten Abstand von der zweiten Welle (3) um diese umläuft.

2. Vorrichtung nach Anspruch 1, dadurch gekennzeichnet, dass die eine umlaufende Welle (6) drehbar in einem zur zweiten Welle (3) konzentrischen und rotierend antreibbaren Ring (5) gelagert ist.

3. Vorrichtung nach Anspruch 2, dadurch gekennzeichnet, dass der Ring (5) durch einen mit diesem verbundenen Zahnkranz (8) und ein mit diesem in Eingriff stehendes Zahnrad (10) antreibbar ist.

4. Vorrichtung nach Anspruch 2, dadurch gekennzeichnet, dass der Ring (5) auf der zweiten, durch das Zentrum des Rings (5) sich erstreckenden, feststehenden Welle (3) drehbar gelagert ist.

5. Vorrichtung nach Anspruch 1, dadurch gekennzeichnet, dass ein zur Drehrichtung der umlaufenden Welle (6) gegensinnig rotierend antreibbarer Behälter (25) eine zum Zusammenwirken mit dem Körper (15) bestimmte kreisringförmige Mulde (26) unterhalb der umlaufenden Welle (6) aufweist, um mit dem rotierenden und taumelnden Körper (15) in der Mulde (26) vorhandenes Material wie Schüttgut, Pulver etc. zu behandeln.

## Claims

1. Device for driving a body, performing simultaneously a rotary and tumbling movement, which is based on the principle of the invertible kinematik chain; said body being hung on two forked-shied gimbals (14) by means of central pivots (16, 17), in order to rotate around two skewed axes, whereby each of the said gimbals is connected by means of one swivel bearing (13) each to one of two parallel shafts (3, 6), wherein at a constant distance from the second shaft (3), the one shaft (6) rotates around said second shaft.

2. Device, as claimed in claim 1, wherein the rotating shaft (6) is rotated in a ring (5), which is driven to rotate and is concentric to the second shaft (3).

3. Device, as claimed in claim 2, wherein the ring (5) is driven by a gear rim (8), which is connected to said ring, and a gear wheel (10), which mates with said rim.

4. Device, as claimed in claim 2, wherein the ring (5) is rotatably journalled on the second permanent shaft (3), which extends through the center of the ring (5).

5. Device, as claimed in claim 1, wherein a container (25), which can be driven to rotate counter-clockwise to the rotational direction of the rotating shaft (6) has a circular depression (26), which is meant to interact with the body (15), beneath the rotating shaft (6) in order to process the material such as bulk material, powder, etc. in the depression (26) with the rotating and tumbling body (15).

## Revendications

1. Dispositif pour l'entraînement d'un corps qui pour l'exécution simultanée d'une rotation et d'une nutation reposant sur le principe d'une chaîne à articulations relevable, est suspendu à deux bielles fourchues (14) au moyen de tourillons (16, 17) pour se mouvoir autour de deux axes obliques l'un par rapport à l'autre, chacune des bielles étant connectée au moyen d'un palier oscillant (13) avec l'un des deux arbres parallèles (3, 6), caractérisé par le fait que l'un des arbres (6) tourne autour du second arbre (3) à distance constante.

2. Dispositif selon la revendication 1, caractérisé par le fait que l'arbre mobile (6) est monté pivotant dans une couronne (5) concentrique au second arbre (3) et pouvant être mise en rotation.

3. Dispositif selon la revendication 2, caractérisé par le fait que la couronne (5) peut être entraînée par une couronne dentée (8) dont elle est solidaire et par une roue dentée engrenant avec elle (10).

4. Dispositif selon la revendication 2, caractérisé par le fait que la couronne (5) est montée pivotante sur le second arbre fixe (3) passant par le centre de la couronne (5).

5. Dispositif selon la revendication 1, caractérisé par le fait qu'un réservoir (25) tournant en sens contraire au sens de rotation de l'arbre mobile (6) présente une cavité en forme de couronne (26), en-dessous de l'arbre mobile (6), destinée a coopérer avec un corps (15) tournant et oscillant pour le traitement, de matières telles que des produits pulvérulents, poudres etc.. se trouvant dans la cavité (26).

*Fig 1*

Fig 2

Fig 3

Fig 4